# EUROPÄISCHE PATENTSCHRIFT

(11) **EP 2 339 788 B1**
(45) Veröffentlichungstag und Bekanntmachung des Hinweises auf die Patenterteilung: **06.11.2013**
(21) Anmeldenummer: 10193822.3
(22) Anmeldetag: 06.12.2010
(51) Int. Cl.: H02P 29/00, H04L 12/40

(54) **Ansteuervorrichtung für eine elektrische Maschine und ein Motorsystem**
Control device for an electric machine and a motor system
Dispositif de commande pour une machine électrique et un système de moteur

(30) Priorität: 22.12.2009 DE 102009055126
(43) Veröffentlichungstag der Anmeldung: 29.06.2011
(73) Patentinhaber: Robert Bosch GmbH, 70442 Stuttgart (DE)
(72) Erfinder: Rummel, Michael, 77855, Achern-Oensbach (DE); Tisch, Florian, 77871, Renchen-Ulm (DE)

(56) Entgegenhaltungen:
- EP-A2- 1 017 161
- GB-A- 2 399 237
- JP-A- 2007 161 141

## Beschreibung

### Technisches Gebiet

Die Erfindung betrifft Motorsysteme, insbesondere Ansteuervorrichtungen mit einer Steuereinheit und einer Endstufe zum Treiben einer elektrischen Maschine.

### Stand der Technik

Eine elektronisch kommutierte elektrische Maschine weist in der Regel eine Ansteuervorrichtung auf, die eine Steuereinheit und eine Endstufe umfasst. Die Endstufe ist in der Regel mit zwei oder mehr als zwei Inverterschaltungen, den sogenannten Halbbrückenschaltungen, aufgebaut, bei denen zwei Leistungshalbleiterschalter in Serie an die Versorgungspannung angeschlossen sind und an einem Abgriff zwischen den Leistungshalbleiterschaltern ein Motoranschluss angeschlossen ist.

Die Leistungshalbleiterschalter werden von der Steuereinheit in geeigneter Weise angesteuert, um den betreffenden Motoranschluss durch Öffnen und Schließen der Leistungshalbleiterschalter mit einem hohem Versorgungspotenzial oder einem niedrigen Versorgungspotenzial zu verbinden. Die Abfolge dieser Ansteuerung und die Zeitdauer des Anliegens des jeweiligen Potenzials, die beispielsweise durch das bekannte Pulsweitenmodulationsverfahren vorgegeben wird, bestimmt, mit welcher elektrischen Leistung die elektrische Maschine angesteuert wird.

In der Regel unterscheiden sich Motorsysteme vor allem durch die unterschiedlichen Topologien der Endstufe und insbesondere durch die Anzahl der verwendeten Inverterschaltungen in der Endstufe. Während die Steuereinheit in der Regel mit Hilfe eines Mikrocontrollers realisiert werden und lediglich die Ansteuersignale für die Leistungshalbleiterschalter in der Endstufe vorgeben, kann durch die Auswahl der Anzahl der Inverterschaltungen die Endstufe an den Typ und die gewünschte Ansteuerungsart der jeweils anzusteuernden elektrische Maschine angepasst werden. Beispielsweise kann eine einzige Inverterschaltung verwendet werden, wenn man einen bürstenkommutierten Gleichstrommotor ansteuern möchte. Um verschiedene Drehrichtungen des bürstenkommutierten Gleichstrommotors zu realisieren, kann eine Ansteuerung mit zwei Inverterschaltungen vorgesehen werden, die eine sogenannte H-Brückenschaltung ausbilden. Alternativ kann zur Ansteuerung eines Drehstrommotors eine Anzahl von Inverterschaltungen vorgesehen werden, die der Anzahl der Phasen des Drehstrommotors entspricht. Allgemein müssen für die verschiedenen Typen von elektrischen Maschinen daher die Ansteuervorrichtungen entsprechend ausgelegt werden. In der Regel ist eine Ansteuervorrichtung als ein integriertes Modul ausgebildet und es existiert bislang daher kein gemeinsames ganzheitliches Schaltungsdesign für die Ansteuervorrichtungen verschiedenartiger elektrischer Maschinen, da die Anforderungen, insbesondere an die Endstufe, unterschiedlich sind.

Das Dokument JP 2007 161 141 offenbart eine Motorsteuerung auf der Grundlage des "Serial Peripheral Interface" mit MISO- und MOSI-Signalisierung.

Das Dokument EP 1 017 161 offenbart eine Motorsteuerung mit einem Wechselrichter, der über eine Schnittstelle mit einem Mikrocontroller verbunden ist. Der Mikrocontroller ist mittels eines Transceivers mit einem als CAN-Bus ausgebildeten Feldbus verbunden. Der Motorsteuerung werden Drehzahl-Sollwerte über den CAN-Bus vorgegeben.

Das Dokument GB 2 399 237 offenbart eine ähnliche Motorsteuerung wie EP 1 017 161, bei der ein Wechselrichter über einen seriellen Bus mit einem Bedienelement verbunden ist, von dem aus der Wechselrichter gesteuert wird.

Es ist daher Aufgabe der vorliegenden Erfindung, eine Ansteuervorrichtung zur Verfügung zu stellen, die in einfacher Weise an verschiedenen Typen von elektrischen Maschinen angepasst werden kann. Es ist weiterhin Aufgabe der vorliegenden Erfindung, ein Motorsystem zur Verfügung zu stellen, dass modular aufgebaut ist.

### Offenbarung der Erfindung

Diese Aufgabe wird durch eine Endstufe gemäß Anspruch 1, sowie durch ein Motorsystem gemäß dem nebengeordneten Anspruchs gelöst.

Weitere vorteilhafte Ausgestaltungen sind in den abhängigen Ansprüchen angegeben.

Gemäß einem ersten Aspekt ist ein Endstufenmodul zum Aufbau einer Endstufe vorgesehen. Das Endstufenmodul umfasst:
- eine Treiberschaltung, insbesondere eine Inverterschaltung, zum Betreiben einer elektrischen Maschine, mit einem oder mehreren Schaltelementen, insbesondere Leistungshalbleiterschaltern;
- eine Kommunikationseinheit mit einer Schnittstelle zum Empfangen einer über ein Bussystem bereitgestellten Ansteuerinformation, wobei die Kommunikationseinheit ausgebildet ist, um abhängig von der Ansteuerinformation Ansteuersignale zu generieren, mit denen die Treiberschaltung angesteuert wird.

Weiterhin ist das Endstufenmodul als separates Bauteil gefertigt.

Eine Idee der obigen Endstufenmodule besteht darin, diese als separate Bauteile auszuführen. Das Endstufenmodul ist mit einer Treiberschaltung versehen, das mit weiteren gleichartigen Endstufenmodulen kombinierbar ist, um eine Endstufe für verschiedenartige elektrische Maschinen zu schaffen. Dadurch können diese flexibel zur Realisierung verschiedener Motorsysteme eingesetzt werden. Mit Hilfe der Kommunikationseinheit können diese von einer geeigneten Steuereinheit die Ansteuerinformation erhalten, die angibt, wie die Schaltelemente der jeweiligen Treiberschaltung angesteuert werden sollen. Auf diese Weise kann das Motorsystem in einfacher Weise lediglich durch die Auswahl der Anzahl der entsprechenden Inverterschaltungen und durch eine entsprechende Programmierung der Steuereinheit für verschiedenen Typen von elektrischen Maschinen ausgebildet werden.

Gemäß einer Ausführungsform kann die Kommunikationseinheit ein Eingangsregister zur Übernahme der Ansteuerinformation und einen Zeitgeber umfassen, um basierend auf den Ansteuerinformationen die Ansteuersignale zu generieren.

Insbesondere kann die Kommunikationseinheit ausgebildet sein, um serielle Daten, die die Ansteuerinformation darstellen, gemäß einem vorgegebenen Busprotokoll, insbesondere einem SPI-Protokoll, zu übernehmen.

Gemäß einem weiteren Aspekt ist eine Endstufe mit einem oder mehreren der obigen Endstufenmodule vorgesehen. Die Endstufenmodule können Eingangsregister aufweisen, die seriell verschaltet sind, so dass die Ansteuerinformation seriell in die Eingangsregister einlesbar sind, und weiterhin über einen Übernahmeeingang verfügen, um abhängig von einem Übernahmesignal aus den in dem Eingangsregister befindlichen Ansteuerinformation jeweils Ansteuersignale zur Ansteuerung der jeweiligen Treiberschaltung zu generieren.

Gemäß einem weiteren Aspekt ist ein Motorsystem vorgesehen. Das Motorsystem umfasst:
- eine elektrische Maschine;
- eine Steuereinheit zum Bereitstellen einer Ansteuerinformation;
- ein Bussystem zum Übertragen der Ansteuerinformation;
- die obige Endstufe, deren Endstufenmodule so mit dem Bussystem verbunden sind, um die jeweilige Ansteuerinformation zu empfangen und die Ansteuersignale für die Treiberschaltung zu generieren.

Weiterhin kann eine Kommunikations-Schnittstelle vorgesehen sein, um eine externe Angabe über eine Stellgröße als eine Stellgrößeninformation zu empfangen und um die Stellgrößeninformation der Steuereinheit bereitzustellen, wobei die Steuereinheit ausgebildet ist, um abhängig von der Stellgrößeninformation die Ansteuerinformation für jedes der Endstufenmodule der Endstufe zu erzeugen.

Gemäß einer Ausführungsform kann die Steuereinheit mit einer Sensoreinheit gekoppelt sein, um eine Sensorinformation über die elektrische Maschine zu erfassen und diese der Steuereinheit bereitzustellen, wobei die Steuereinheit ausgebildet ist, um abhängig von der Sensorinformation die Ansteuerinformation für jedes der Endstufenmodule der Endstufe zu erzeugen.

### Kurzbeschreibung der Zeichnungen

Bevorzugte Ausführungsformen werden nachfolgend anhand der beigefügten Zeichnungen näher erläutert. Es zeigen:
Figur 1 eine schematische Darstellung eines Motorsystems gemäß einer ersten Ausführungsform;
Figur 2 eine schematische Darstellung eines Motorsystems gemäß einer zweiten Ausführungsform, in der die Elemente der Erfindung lediglich teilweise zum Einsatz kommen;
Figur 3 eine schematische Darstellung eines Motorsystems gemäß einer dritten Ausführungsform.

Gleiche Bezugszeichen entsprechen Elementen gleicher oder vergleichbarer Funktion.

### Beschreibung von Ausführungsformen

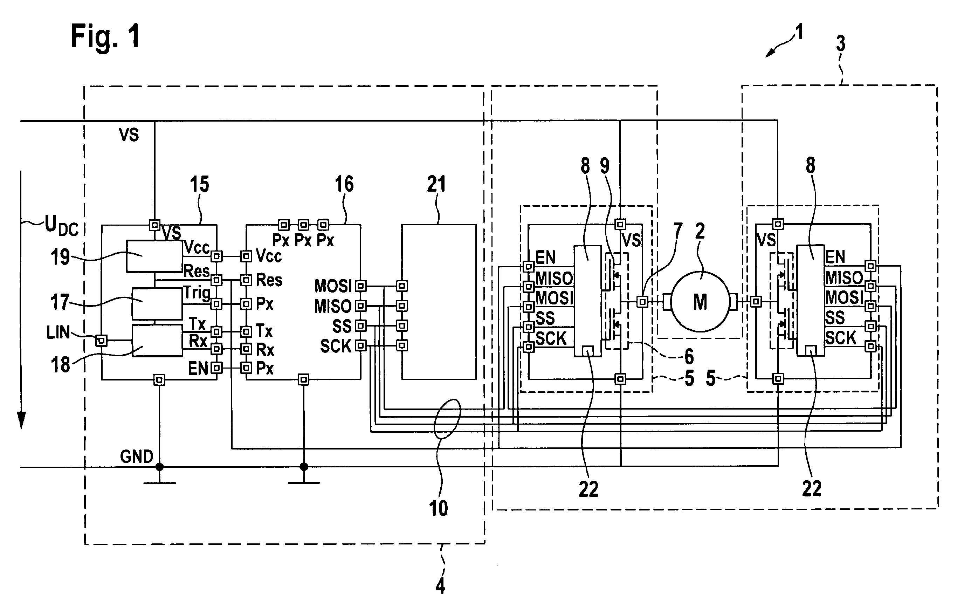

Figur 1 zeigt ein Motorsystem 1 mit einem bürstenkommutierten Gleichstrommotor 2 als einer elektrischen Maschine, der über eine Endstufe 3 mit elektrischer Leistung versorgt wird. Die Endstufe 3 steht in Verbindung mit einer Steuereinheit 4 die der Endstufe 3 eine Information über die Ansteuerung des Gleichstrommotors 2 bereitstellt. Das Motorsystem 1 besteht ein mehreren Komponenten, die in den Zeichnungen als Blöcke mit durchgezogenen Linien gezeichnet sind. Schnittstellen dieser Komponenten sind als zwei ineinander gezeichnete Quadrate an der Umrandung dieser Blöcke dargestellt.

Die Endstufe 3 umfasst im vorliegenden Ausführungsbeispiel zwei Endstufenmodule 5, die jeweils eine Inverterschaltung 6 aufweisen. Jede der Inverterschaltungen 6 weist zwei in Reihe geschaltete Leistungshalbleiterschalter 9 auf. Die Leistungshalbleiterschalter 9 sind beispielsweise als MOSFETs, Thyristoren, IGBTs oder dergleichen ausgebildet.

Die in Reihe geschalteten Leistungshalbleiterschalter 9 sind zwischen einem hohen Versorgungspotenzial VS und einem niedrigen Versorgungspotenzial GND, zwischen denen die Versorgungsspannung UDC anliegt, angeschlossen. An einem Knoten, an denen die Leistungshalbleiterschalter 9 miteinander verbunden sind, ist eine Motorklemme 7 vorgesehen, die mit einem Motoranschluss des Gleichstrommotors 2 verbunden ist.

Jedes der Endstufenmodule 5 umfasst weiterhin eine Kommunikationseinheit 8, die Ansteuersignale für die jeweiligen Leistungshalbleiterschalter 9 der Inverterschaltung 6 bereitstellt. Weiterhin weist die Kommunikationseinheit 8 eine Schnittstelle zu einem Bussystem 10 auf, über die das Endstufenmodul 5 mit einer Ansteuerinformation versorgt wird. In der Kommunikationseinheit 8 wird die Ansteuerinformation von extern empfangen und gemäß einem Protokoll oder einer vordefinierten Funktionalität in Ansteuersignale für die Leistungshalbleiterschalter 9 umgesetzt.

Beispielsweise kann die Ansteuerinformation eine Angabe zu einem Tastverhältnis enthalten, gemäß dem die Leistungshalbleiterschalter 9 im zeitlich definierten Wechsel geöffnet und geschlossen werden. Das Tastverhältnis kann die dem Gleichstrommotor 2 bereitzustellende elektrische Leistung angeben und bestimmt einen zeitlichen Anteil einer Zykluszeitdauer, während der der Klemmenanschluss 7 mit dem hohen Versorgungspotenzial VS verbunden ist. Weiterhin kann die Ansteuerinformation einen Phasenbezug angeben, der notwendig ist, wenn mehrere Endstufenmodule 5 vorgesehen sind. Mit Hilfe des Phasenbezugs kann eine versetzte Ansteuerung durch die jeweiligen Inverterschaltung 6 in definierter Weise vorgenommen werden.

Alternativ oder zusätzlich kann die Ansteuerinformation auch einen oder mehrere Zeitpunkte definieren, zu denen einer der Leistungshalbleiterschalter 9 geschlossen bzw. geöffnet wird, und Zeitdauern definieren, wie lange dieser Schaltzustand des betreffenden Leistungshalbleiterschalters 9 eingenommen werden soll.

Die Ansteuerinformation wird von der Steuereinheit 4 über das Bussystem 10 an die einzelnen Endstufenmodule 5 übertragen. Die Steuereinheit 4 weist ein Versorgungsmodul 15 auf, das aus der Versorgungsspannung UDC eine interne Versorgungsspannung VCC für einen Microcontrollercontroler 16 bereitstellt. Dazu weist das Versorgungsmodul 15 einen Spannungsregler 19 auf. Weiterhin ist eine Überwachungseinheit 17 vorgesehen, die das permanente Anliegen der Versorgungsspannung UDC überwacht und dem Mikrocontroller 16 mitteilt, wenn die interne Versorgungsspannung nicht kontinuierlich bereitgestellt werden kann, so dass der Mikrocontroller 16 an die Endstufenmodule 5 eine Ansteuerinformation übermitteln kann, die zu einem sofortigem Abschalten des Gleichstrommotors 2 führt. Weiterhin ist eine Kommunikations-Schnittstelle 18 vorgesehen, die mit einem externen Feldbus wie z.B. LIN (Local Interconnected Network) verbunden ist, um externe Informationen wie z.B. eine Stellgröße für den Gleichstrommotor 2 zu erhalten. Die Stellgröße wird in der Kommunikations-Schnittstelle 18 in eine Stellinformation für den Mikrocontroller 16 umgewandelt, und an diesen kommuniziert.

In dem Mikrocontroller 16 wird bestimmt, in welcher Weise der Gleichstrommotor 2 angesteuert werden soll, d.h. mit welchen Tastverhältnissen und mit welchen Zeitbezügen die einzelnen Endstufenmodule 5 abhängig von der Stellgröße betrieben werden sollen. Dazu generiert der Mikrocontroller 16 die Ansteuerinformation, die nun über das Bussystem 10 an die Endstufenmodule 5 übertragen wird.

Weiterhin kann eine Sensoreinheit 21 vorgesehen sein, die beispielsweise einen AMR-Sensor, der nahe dem Gleichstrommotor 2 angeordnet ist, umfasst. Der AMR-Sensor (AMR: Anisotroper Magnetwiderstand) dient dazu, die als Sensorinformation eine Rotorlage eines Rotors bzw. die Drehzahl des Gleichstrommotors 2 zu erfassen, so dass der Mikrocontroller 16 die Ansteuerinformation entsprechend der Rotorlage bzw. der Drehzahl des Gleichstrommotors 2 ermitteln kann. Die Sensoreinheit 21 ist ebenfalls über das Bussystem 10 mit dem Mikrocontroller 16 gekoppelt, so dass die Sensorinformation über das Bussystem 10 ähnlich wie die Ansteuerinformation übertragen wird.

Im vorliegendem Ausführungsbeispiel ist das Bussystem 10 als SPI-Bus ausgeführt (SPI: Serial Peripheral Interface). Bei diesem Bussystem 10 werden die kommunizierenden Einheiten in Form einer Daisy-Cain, d.h. seriell hintereinander gekoppelt und zu einem Ring verschaltet. Ein Master-Modul, in diesem Fall der Mikrocontroller 16, sendet seriell die Daten der Ansteuerinformation über einen Ausgang MOSI zunächst zu einem ersten der Endstufenmodule 5, wo diese Daten über einem MISO-Eingang empfangen werden. Dort werden die empfangenen Daten gelatcht, d.h. zwischengespeichert, und über einen MOSI-Ausgang zu der zweiten der Endstufenmodule 5 weitergeleitet. Im zweiten Endstufenmodul 5 werden die seriellen Daten über den MISO-Eingang eingelesen und in dem zweiten Endstufenmodul 5 gelatcht. Die Daten werden über einen MOSI-Ausgang des zweiten Endstufenmoduls 5 an einem MISO-Eingang des Mikrocontrollers 16 angelegt. Die Verschaltung der Endstufenmodule 5 in einer Serienschaltung bewirkt, dass die übertragenen Daten seriell in entsprechende Eingangsregister 22 eingeschrieben werden, wobei die serielle Verschaltung der Eingangsregister 22 der Endstufenmodule 5 quasi ein einziges Schieberegister bildet. Auf diese Weise können die Daten der Ansteuerinformation hintereinander seriell bitweise von dem Mikrocontroller 16 ausgegeben werden, wobei der Teil der Daten, die die Ansteuerinformation für das zweite Endstufenmodul 5 betreffen, zuerst und anschließend der Teil der Daten, der die Ansteuerinformation für das erste Endstufenmodul 5 betrifft, ausgegeben werden.

Mit Hilfe eines Bustaktes SCK wird das Einlesen in die Eingangsregister 22 der Endstufenmodule 5 getacktet. Sind die Ansteuerinformationen in die entsprechenden Eingangsregister der Endstufenmodule 5 übertragen, so werden diese mit Hilfe eines von dem Mikrocontroller 16 generierten Übernahmesignals SS freigegeben, sobald das letzte Bit der Daten der Ansteuerinformation für das erste Endstufenmodul 5 gesendet worden ist. Auf diese Weise liegt eine entsprechende Ansteuerinformation in den Kommunikationseinheiten 8 der Endstufenmodule 5 vor, die dort in entsprechende Ansteuersignale für die jeweilige Inverterschaltung 6 umgewandelt werden können.

Die Endstufenmodule 5 können einen eigenen Zeitgeber (nicht gezeigt), z.B. in Form eines Taktgenerators, aufweisen oder mit Hilfe eines geeigneten Zählers und dem bereitgestellten Taktsignal des Bussystems 10 eine interne Zeitinformation erhalten bzw. generieren. Abhängig von der internen Zeitinformation und der Ansteuerinformation können dann die Ansteuersignale mit ihrem durch die Ansteuerinformation definierten zeitlichen Bezug so erzeugt werden, dass sie den Einschalt- und Ausschaltzeitpunkt jedes der Leistungshalbleiterschalter 9 der zugeordneten Inverterschaltung 6 bestimmen.

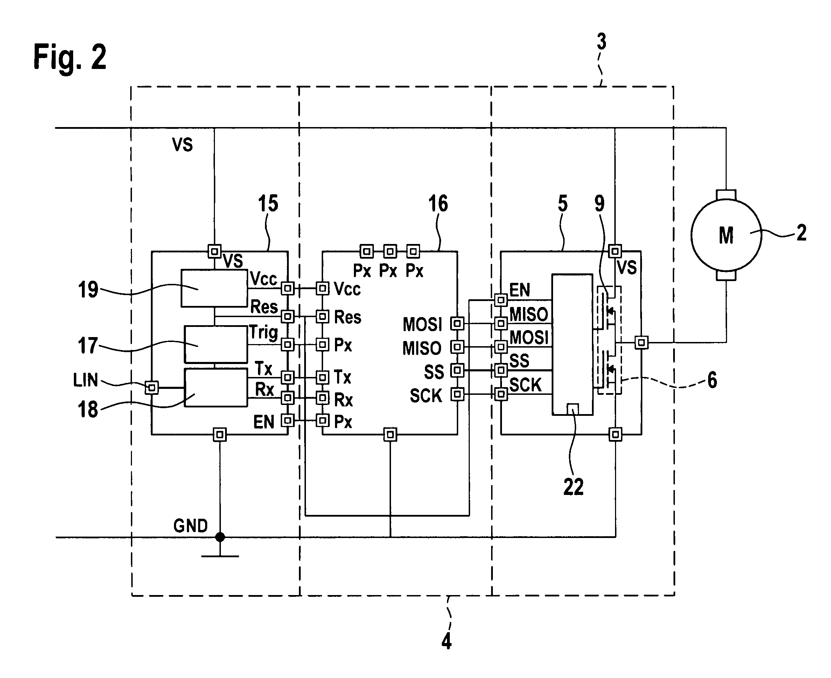

In Figur 2 ist eine weitere Ausführungsform für ein Motorsystem dargestellt. In dem Motorsystem der Figur 2 umfasst die Endstufe 3 nur ein Endstufenmodul 5, so dass der Gleichstrommotor 2 nur in einer Drehrichtung betreibbar ist. Die Steuereinheit 4 ist im Wesentlichen analog zu der Ausführungsform der Figur 1 ausgebildet, wobei auf einen Drehzahlsensor in einer Sensoreinheit 21 verzichtet werden kann. Bei dem Motorsystem der Figur 2 entspricht die Steuereinheit 4 im Wesentlichen dem Aufbau der Steuereinheit des Motorsystems 1, wobei im Unterschied der Mikrocontroller 16 so programmiert ist, das dieser nur ein Endstufenmodul 5 ansteuert.

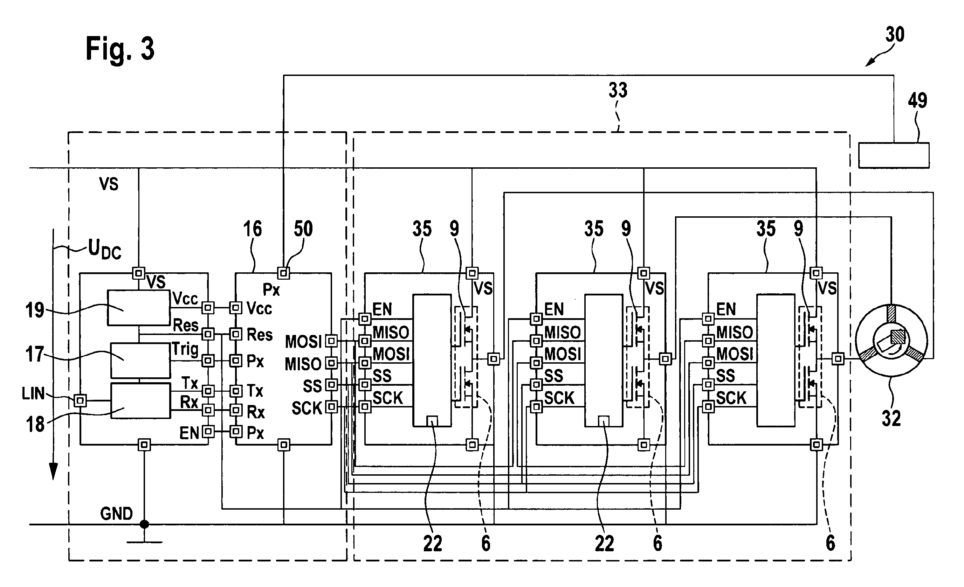

In Figur 3 ist eine schematische Darstellung eines Motorsystems 30 mit einer mehrphasigen elektrischen Maschine, insbesondere einem Synchronmotor 32 dargestellt. Jede Phase des Synchronmotors 32 wird von einem Endstufenmodul 35 einer Endstufe 33 angesteuert. Die Endstufe 33 umfasst eine Anzahl von Endstufenmodulen 35, die der Anzahl der Phasen des Synchronmotors 32 entspricht. In dargestelltem Ausführungsbeispiel handelt es sich um einen dreiphasigen Synchronmotor 32, so dass drei Endstufenmodule 35 vorgesehen sind. Die Endstufenmodule 35 entsprechen im Wesentlichen den Endstufenmodulen 5 der Ausführungsformen der Figur 1 und Figur 2. Auch der Aufbau des Mikrocontrollers 16 und der Versorgungseinheit 15 entspricht derjenigen der Ausführungsformen der Figur 1 und Figur 2.

Da für die Ansteuerung eines Synchronmotors eine Kenntnis der Rotorlage notwendig ist, kann eine entsprechende Sensoreinheit 49 an dem Synchronmotor 32 angeordnet sein. Die Sensoreinheit 49, kann beispielsweise Hallsensoren umfassen, mit denen sich die Rotorlage bestimmen lässt. Die Sensoreinheit 49 kann direkt mit einer entsprechenden Sensorschnittstelle 50 des Mikrocontrollers 16 verbunden sein. Über die Sensorschnittstelle 50 kann eine elektrische Größe von dem Mikrocontroller 16 empfangen werden und dort in eine digitale Größe umgewandelt werden, z.B. mit Hilfe eines Analog-Digital-Wandlers. Auf diese Weise erhält der Microcontroller 16 die direkte Information über die Rotorlage, so dass den Endstufenmodulen 5 eine Ansteuerinformation basierend auf der Rotorlage bereitgestellt werden kann.

Anstelle des SPI-Bussystems 10 können auch andere Bussysteme verwendet werden. Da die Übertragung der Ansteuerinformation und das Anlegen entsprechender Ansteuersignale für die Inverterschaltungen 6 in der Regel zeitnah erfolgen muss und daher zeitkritisch ist, kommen nur Bussysteme in Betracht, bei denen die Übertragungszeit bzw. Bereitstellungszeit der Ansteuerinformation in den Endstufenmodulen 5 bezüglich der Zyklusdauer der pulsweitenmodulierten Ansteuerung der Endstufenmodule 5 geringer ist.

## Patentansprüche

1. Endstufe (3) mit mehreren separat gefertigten Endstufenmodulen (5), wobei jedes der Endstufenmodule (5) umfasst:
- eine Inverterschaltung (6), zum Betreiben einer elektrischen Maschine (2), mit einem oder mehreren in Reihe geschalteten Schaltelementen (9), insbesondere Leistungshalbleiterschaltern;
- eine Kommunikationseinheit (8) mit einer Schnittstelle zum Empfangen einer über ein Bussystem (10) bereitgestellten Ansteuerinformation, wobei die Kommunikationseinheit (8) ausgebildet ist, um abhängig von der Ansteuerinformation Ansteuersignale zu generieren, mit denen die Inverterschaltung (6) angesteuert wird, wobei die Kommunikationseinheit (8) ausgebildet ist, um die Ansteuerinformation über einen MISO-Eingang zu empfangen und über einen MOSI-Ausgang weiterzuleiten;
wobei die Endstufenmodule (5) seriell verschaltet sind, um eine über den MOSI-Ausgang eines der Endstufenmodule (5) weitergeleiteten Ansteuerinformation über den MISO-Eingang eines weiteren der Endstufenmodule (5) zu empfangen.

2. Endstufe (3) nach Anspruch 1, wobei die Kommunikationseinheit (8) jedes der Endstufenmodule (5) ein Eingangsregister zur Übernahme der Ansteuerinformation und einen Zeitgeber umfasst, um basierend auf den Ansteuerinformationen die Ansteuersignale zu generieren.

3. Endstufe (3) nach einem der Ansprüche 1 bis 2, wobei die Kommunikationseinheit (8) jedes der Endstufenmodule (5) ausgebildet ist, um serielle Daten, die die Ansteuerinformation darstellen, gemäß einem vorgegebenen Busprotokoll, insbesondere einem SPI-Protokoll, zu übernehmen.

4. Endstufe (3) nach einem der Ansprüche 1 bis 3, wobei die Endstufenmodule (5) Eingangsregister aufweisen, die seriell verschaltet sind, so dass die Ansteuerinformation seriell in die Eingangsregister (22) einlesbar sind, und weiterhin über einen Übernahmeeingang verfügen, um abhängig von einem Übernahmesignal aus den in dem Eingangsregister (22) befindlichen Ansteuerinformation jeweils Ansteuersignale zur Ansteuerung der jeweiligen Treiberschaltung (6) zu generieren.

5. Motorsystem (1) umfassend:
- eine elektrische Maschine (2);
- eine Steuereinheit (4) zum Bereitstellen einer Ansteuerinformation;
- ein Bussystem (10) zum seriellen Übertragen der Ansteuerinformation;
- eine Endstufe (3) nach einem der Ansprüche 1 bis 4, deren Endstufenmodule (5) so mit dem Bussystem (10) verbunden sind, um die jeweilige Ansteuerinformation zu empfangen und die Ansteuersignale für die Treiberschaltung (6) zu generieren.

6. Motorsystem (1) nach Anspruch 5, wobei eine Kommunikations-Schnittstelle vorgesehen ist, um eine externe Angabe über eine Stellgröße als eine Stellgrößeninformation zu empfangen und um die Stellgrößeninformation der Steuereinheit (4) bereitzustellen, wobei die Steuereinheit (4) ausgebildet ist, um abhängig von der Stellgrößeninformation die Ansteuerinformation für jedes der Endstufenmodule (5) der Endstufe (3) zu erzeugen.

7. Motorsystem (1) nach Anspruch 5 oder 6, wobei die Steuereinheit (4) mit einer Sensoreinheit gekoppelt ist, um eine Sensorinformation über die elektrische Maschine (2) zu erfassen und diese der Steuereinheit (4) bereitzustellen, wobei die Steuereinheit (4) ausgebildet ist, um abhängig von der Sensorinformation die Ansteuerinformation für jedes der Endstufenmodule (5) der Endstufe (3) zu erzeugen.

## Claims

1. Output stage (3) having a plurality of separately produced output stage modules (5), wherein each of the output stage modules (5) comprises:
- an inverter circuit (6), for operating an electric machine (2), having one or more series-connected switching elements (9), particularly power semiconductor switches;
- a communication unit (8) having an interface for receiving a piece of actuation information provided by a bus system (10), wherein the communication unit (8) is designed to take the actuation information as a basis for generating actuation signals that are used to actuate the inverter circuit (6), wherein the communication unit (8) is designed to receive the actuation information via an MISO input and to forward it via an MOSI output;
wherein the output stage modules (5) are connected up in series in order to receive a piece of actuation information that is forwarded via the MOSI output of one of the output stage modules (5) via the MISO input of a further of the output stage modules (5).

2. Output stage (3) according to Claim 1, wherein the communication unit (8) of each of the output stage modules (5) comprises an input register for adopting the actuation information and a timer in order to take the actuation information as a basis for generating the actuation signals.

3. Output stage (3) according to either of Claims 1 and 2, wherein the communication unit (8) of each of the output stage modules (5) is designed to adopt serial data that represent the actuation information according to a prescribed bus protocol, particularly an SPI protocol.

4. Output stage (3) according to one of Claims 1 to 3, wherein the output stage modules (5) have input registers that are connected up in series, as a result of which the actuation information can be read into the input registers (22) in series, and also have an adoption input in order to take an adoption signal as a basis for generating respective actuation signals for actuating the respective driver circuit (6) from the actuation information that is in the input register (22).

5. Motor system (1) comprising:
- an electric machine (2);
- a control unit (4) for providing a piece of actuation information;
- a bus system (10) for serially transmitting the actuation information;
- an output stage (3) according to one of Claims 1 to 4, the output stage modules (5) of which are connected to the bus system (10) so as to receive the respective actuation information and to generate the actuation signals for the driver circuit (6).

6. Motor system (1) according to Claim 5, wherein a communication interface is provided in order to receive an external statement about a manipulated variable as a piece of manipulated-variable information and in order to provide the manipulated-variable information for the control unit (4), wherein the control unit (4) is designed to take the manipulated-variable information as a basis for producing the actuation information for each of the output stage modules (5) of the output stage (3).

7. Motor system (1) according to Claim 5 or 6, wherein the control unit (4) is coupled to a sensor unit in order to capture a piece of sensor information about the electric machine (2) and to provide said information for the control unit (4), wherein the control unit (4) is designed to take the sensor information as a basis for producing the actuation information for each of the output stage modules (5) of the output stage (3).

## Revendications

1. Etage terminal (3) présentant plusieurs modules (5) d'étage terminal réalisés séparément, chacun des modules (5) d'étage terminal comportant :
un circuit inverseur (6) qui alimente une machine électrique (2) et présentant un ou plusieurs éléments de commutation (9) raccordés en série, en particulier des commutateurs de puissance à semi-conducteur,
une unité de communication (8) présentant une interface permettant de recevoir une information de commande délivrée par un système de bus (10),
l'unité de commutation (8) étant configurée pour délivrer en fonction de l'information de commande des signes de commande par lesquels le circuit inverseur (6) est commandé,
l'unité de commutation (8) étant configurée pour recevoir les informations de commande par une entrée MISO et la transférer par une sortie MOSI,
les modules (5) d'étage terminal étant raccordés en série pour recevoir une information de commande transmise par la sortie MOSI de l'un des modules (5) d'étage terminal par l'intermédiaire de l'entrée MISO d'un autre des modules (5) d'étage terminal.

2. Etage terminal (3) selon la revendication 1, dans lequel l'unité de communication (8) de chacun des modules (5) d'étage terminal comporte un registre d'entrée qui reprend les informations de commande et une horloge qui délivre les signaux de commande sur base des informations de commande.

3. Etage terminal (3) selon l'une des revendications 1 ou 2, dans lequel l'unité de communication (8) de chacun des modules (5) d'étage terminal est configurée pour transmettre des données série qui représentent les informations de commande en fonction d'un protocole de bus prédéterminé, en particulier d'un protocole SPI.

4. Etage terminal (3) selon l'une des revendications 1 à 3, dans lequel les modules (5) d'étage terminal présentent des registres d'entrée raccordés en série de telle sorte que l'information de commande puisse être lue en série dans les registres d'entrée (22) et dispose en outre d'une entrée de transfert permettant en fonction d'un signal de transfert de délivrer à partir des informations de commande présentes dans le registre d'entrée (22) des signaux de commande destinés à commander le circuit pilote (6) concerné.

5. Système (1) de moteur comprenant :
une machine électrique (2),
une unité de commande (4) qui délivre des informations de commande,
un système de bus (10) qui transfère en série les informations de commande,
un étage terminal (3) selon l'une des revendications 1 à 4, dont les modules (5) d'étage terminal sont raccordés au système de bus (10) de manière à recevoir l'information de commande concernée et de délivrer des signaux de commande au circuit pilote (6).

6. Système (1) de moteur selon la revendication 5, dans lequel est prévue une interface de communication qui reçoit des indications externes concernant une grandeur de réglage en tant qu'information de grandeur de réglage et qui délivre l'information de grandeur de réglage à l'unité de commande (4), l'unité de commande (4) étant configurée pour délivrer en fonction des informations de grandeur de réglage l'information de commande à chacun des modules (5) d'étage terminal des étages terminaux (3).

7. Système (1) de moteur selon les revendications 5 ou 6, dans lequel l'unité de commande (4) est raccordée à une unité de détection qui saisit des informations de détection concernant une machine électrique (2) et les délivre à l'unité de commande (4), l'unité de commande (4) étant configurée pour délivrer en fonction des informations de détection les informations de commande à chacun des modules (5) des étages terminaux (3).
